(19) Europäisches Patentamt
European Patent Office
Office européen des brevets

(11) EP 1 810 981 A1

(12) EUROPEAN PATENT APPLICATION
published in accordance with Art. 158(3) EPC

(43) Date of publication:
**25.07.2007 Bulletin 2007/30**

(21) Application number: **05800347.6**

(22) Date of filing: **07.11.2005**

(51) Int Cl.:
***C08F 8/00*** *(2006.01)* ***C08F 4/64*** *(2006.01)*
***C08F 10/14*** *(2006.01)*

(86) International application number:
**PCT/JP2005/020367**

(87) International publication number:
**WO 2006/049278 (11.05.2006 Gazette 2006/19)**

(84) Designated Contracting States:
**DE**

(30) Priority: **08.11.2004 JP 2004323401**

(71) Applicant: **IDEMITSU KOSAN CO., LTD.**
**Tokyo 100-8321 (JP)**

(72) Inventors:
- **ABURATANI, Ryo**
  **2990107 Chiba (JP)**
- **OBATA, Yutaka**
  **2990107 Chiba (JP)**
- **TAKEBE, Tomoaki**
  **2990107 Chiba (JP)**
- **SERA, Masanori**
  **2990107 (JP)**
- **MINAMI, Yutaka**
  **2990107 (JP)**

(74) Representative: **Vossius & Partner**
**Siebertstrasse 4**
**81675 München (DE)**

# (54) CROSSLINKED OLEFIN POLYMERS AND PROCESS FOR PRODUCTION THEREOF

(57) Crosslinked olefin polymers which are reduced in stickiness and improved in rigidity, heat resistance, light resistance, and water resistance while retaining the molding properties such as injection moldability, spinnability, film-forming properties and the physical properties such as toughness (including elongation and break strength) and tackiness; and a process for the production thereof. Crosslinked olefin polymers which are obtained by reacting an α-olefin polymer produced by polymerization of at leas: one α-olefin having 6 or more carbon atoms or polymerization of at least one α-olefin having 6 or more carbon atoms with at least one other α-olefin with a crosslinking agent and which satisfy the following requirements: (1) the content of units of α-olefins having 6 or more carbon atoms is 50 mol % or more, (2) the molecular weight distribution (Mw/Mn) as determined by gel permeation chromatography (GPC) is 7.0 or more in terms of polystyrene, (3) the content of components having weight-average molecular weights (Mw) of $10^6$ or more is 5 % by mass or more as determined by GPC, and (4) the stereoregularity indication M4 is 75 mol % or less; and a process for the production of the polymers.

EP 1 810 981 A1

## Description

### Technical Field

The present invention relates to crosslinked olefin polymers useful for such applications as resin modifiers, paint components, ink components, pressure-sensitive adhesive components, adhesive components, primer components, lubricating oil components, heat storage components and high-performance waxes, and a process for the production thereof

### Background Art

Polymers of α-olefins having 8 or less carbon atoms are amorphous and noncrystalline compounds having properties of easy stickiness, thus, they are difficult to be used for such applications as resin modifiers and adhesives, when used as they are produced. Increase of molecular weight of the polymers of α-olefins having 8 or less carbon atoms is therefore undertaken to overcome the difficulty (see Patent Document 1, for example).
However, α-olefin polymers having sufficiently high molecular weight have not been obtained even with the technology described in Patent Document 1. For example, though polymers of α-olefins having 4 or more carbon atoms have been obtained, the maximum molecular weight is 64,000. On the other hand, a method is proposed to reduce the stickiness of polymers of α-olefins having 10 or more carbon atoms (see Patent Document 2, for example), but further reduction of the stickiness is requested. Polymers of α-olefins having less than 10 carbon atoms have low crystallinity, and thus the problem of stickiness has not been solved yet.
Patent Document 1: European Patent Publication No. 403866
Patent Document 2: International Publication No. WO03/070790

### Disclosure of the Invention

### Problems to be Solved by the Invention

The present invention was initiated to address the above problem. Namely, an object of the present invention is to provide a crosslinked olefin polymer which is reduced in stickiness and improved in rigidity, heat-resistance, light-resistance and water-resistance, while retaining the molding properties such as injection moldability, spinnability, film-forming properties and the physical properties such as toughness (including elongation and break strength) and tackiness; and a process for the production thereof.

### Means for Solving the Problems

The present inventors, as a result of extensive investigations to solve the above problems, found that, by applying the crosslinking technology used in polyethylene resin to certain α-olefin polymers, crosslinked olefin polymers having the above-described excellent properties were obtained, by suppressing the decomposition reaction of the α-olefin polymer and promoting the crosslinking reaction preferentially without performing pre-treatment or introducing reactive groups. The present invention was achieved based on the above-described findings.
Namely, the present invention is to provide the following crosslinked olefin polymer and the process for the production thereof.

1. A crosslinked olefin polymer obtained by reacting an α-olefin polymer with a crosslinking agent and satisfies the following requirements (1) to (4), wherein the α-olefin polymer is obtained by polymerizing one or more α-olefin having 6 or more carbon atoms or by polymerizing one or more α-olefin having 6 or more carbon atoms with one or more other α-olefin:

   (1) The content of units of α-olefins having 6 or more carbon atoms is 50 mol % or more,
   (2) The molecular weight distribution (Mw/Mn) as determined by gel permeation chromatography (GPC) is 7.0 or more in terms of polystyrene,
   (3) The content of components having the weight-average molecular weight (Mw) of $10^6$ or more is 5 % by mass or more as determined by GPC, and
   (4) The indicator M4 of stereoregularity is 75 mol % or less.

2. The crosslinked olefin polymer of an α-olefin having 6 or more carbon atoms described above in 1, wherein the α-olefin has 10 or more and less than 30 carbon atoms.
3. The crosslinked olefin polymer described above in 1 or 2, wherein the crosslinking agent is a radical-generating agent generating radicals by decomposition at 60°C or more.
4. A process for producing a crosslinked olefin polymer, comprising reacting an α-olefin polymer with a crosslinking agent in the absence of a solvent and satisfying the following requirements (1) to (4), wherein the α-olefin polymer is obtained by polymerizing one or more α-olefin having 6 or more carbon atoms or by polymerizing one or more α-olefin having 6 or more carbon atoms with one or more other α-olefin:

(1) The content of units of α-olefins having 6 or more carbon atoms is 50 mol % or more,
(2) The molecular weight distribution (Mw/Mn) as determined by gel permeation chromatography (GPC) is 7.0 or more in terms of polystyrene,
(3) The content of components having the weight-average molecular weight (Mw) of $10^6$ or more is 5 % by mass or more as determined by GPC, and
(4) The indicator M4 of stereoregularity is 75 mol % or less.

5. The process for the production of the crosslinked olefin polymer described above in 4, wherein the crosslinking agent is a radical-generating agent generating radicals by decomposition at 60°C or more.
6. The process for producing the crosslinked olefin polymer described above in 4 or 5, wherein the α-olefin polymer is obtained by polymerizing one or more α-olefin having 6 or more carbon atoms or by polymerizing one or more α-olefin having 6 or more carbon atoms with one or more other α-olefin in the presence of a polymerization catalyst comprising (A) a transition metal compound represented by the following general formula (I) and (B) at least one component selected from (B-1) a compound capable of forming an ionic complex by a reaction with the transition metal compound as the component (A) or a derivative thereof and (B-2) an aluminoxane compound.

[Formula 1]

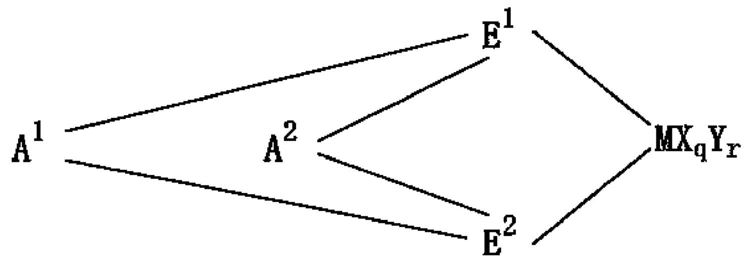

· · · (I)

(In the formula, M represents an element belonging to the groups 3 to 10 of the periodic table or a lanthanoid metal element, $E^1$ and $E^2$ each are a ligand selected from the group consisting of a substituted cyclopentadienyl group, an indenyl group, a substituted indenyl group, a heterocyclopentadienyl group, a substituted heterocyclopentadienyl group, an amide group, a phosphide group, a hydrocarbon group and a silicon-containing group, form a crosslinked structure through $A^1$ and $A^2$ and are identical or different; X represents a σ-bonding ligand, and if there is a plurality of Xs, they may be identical or different and may form a crosslinked structure with other X, $E^1$, $E^2$, or Y.
Y represents a Lewis base, and, if there is a plurality of Ys, they may be identical or different and may form a crosslinked structure with other Y, $E^1$, $E^2$, or X; $A^1$ and $A^2$ each are a bivalent crossing group combining two ligands, represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or $-AlR^1-$, wherein $R^1$ represents a hydrogen atom, a halogen atom, a hydrocarbon group having 1 to 20 carbon atoms, or a halogen-containing hydrocarbon group having 1 to 20 carbon atoms, and are identical or different; q represents an integer of 1 to 5 and is equal to [(atomic valency of M)- 2] and r represents an integer of 0 to 3.)

7. The process for producing the crosslinked olefin polymer described above in any of 4 to 6, wherein the reaction of the α-olefin polymer with the crosslinking agent is continuously carried out in an extrusion molding equipment.

Effects of the Invention

According to the present invention, crosslinked olefin polymers with reduced stickiness and improved rigidity, heat-resistance, light-resistance, water-resistance, and the like can be obtained. In addition, because the melting temperature range of the crosslinked olefin polymer is widened, properties such as the behavior under the molten stare can be improved, leading to wider applications in various uses.

Best Mode for Carrying Out the Invention

The crosslinked olefin polymer of the present invention is the one obtained by reacting an α-olefin polymer with a crosslinking agent, wherein the α-olefin polymer is the one obtained by polymerizing one or more α-olefin having 6 or more carbon atoms, or polymerizing one or more α-olefin having 6 or more carbon atoms with one or more other α-olefin. Such other α-olefins may be α-olefins having 2 to 5 carbon atoms, and specifically include ethylene, propylene, 1-butene, isobutene, 1-pentene, and the like. They may be used solely or in a combination of two kinds or more.
The α-olefins having 6 or more carbon atoms used in the present invention are represented by the following general formula,

$$CH_2=CH-C_nH_{2n+1}$$

(In the formula, n represents an integer of 4 or greater.) include specifically 1-hexene, 1-octene, 1-decene, 1-dodecene, 1-tetradecene, 1-hexadecene, 1-octadecene, 1-eicosene, 1-docosene, 1-tetracosene, and the like, and may be used solely or in a combination of two kinds or more.
In the present invention, preferably an α-olefin having 10 or more and less than 30 carbon atoms, and more preferably having 14 or more and less than 30 carbon atoms may be used. When an α-olefin having 10 or more carbon atoms is used, an α-olefin polymer obtained from such an α-olefin has high crystallinity so that it leads to reduced stickiness and further improved toughness. Also, when an α-olefin having less than 30 carbon atoms is used, an α-olefin polymer obtained from such an α-olefin contains less amounts of unreacted monomers so that it easily leads to a homogeneous composition having a narrow temperature range of melting and crystallization.
The content of units of α-olefins having 6 or more carbon atoms, preferably 10 or more carbon atoms, in the crosslinked olefin polymer of the present invention is 50 mol % or more, preferably 60 to 100 mol %, and more preferably 70 to 100 mol %. When the content of units of α-olefins having 6 or more carbon atoms is 50 mol % or more, it leads to a suitable melting point, resulting in the smooth crosslinking reaction.
The molecular weight distribution (Mw/Mn) as determined by gel permeation chromatography (GPC) of the crosslinked olefin polymer of the present invention is 7.0 or more, preferably 8.0 or more, and more preferably 10 or more.
The statement that the molecular weight distribution (Mw/Mn) is 7.0 or more indicates that the crosslinked olefin polymer suitable for practical use is produced, since the crosslinking reaction progresses to give sufficient amounts of a polymer component having high molecular weight.
Further, the crosslinked olefin polymer of the present invention contains the component having the weight-average molecular weight (Mw) of $10^6$ or higher in the amount of 5 % by mass or more, preferably 7 % by mass or more, and more preferably 10 % by mass or more as determined by GPC. When the amount of this component is 5 % by mass or more, it can improve toughness while retaining moldability, heat-resistance, and rigidity. The measurement by means of the GPC method will be described later.
The crosslinked olefin polymer of the present invention has the isotactic structure having 75 mol % or less in terms of the indicator M4 of stereoregularity. This M4 is preferably 60 mol % or less, and more preferably 45 mol % or less. When M4 is 75 mol % or less, the toughness of the polymer is not deteriorated since the crystallinity is not too high, and the polymer shows the melting behavior even in a narrow temperature range.
Further, the indicator MR of stereoregularity, which is a disorder indicator of stereoregularity, of the crosslinked olefin polymer of the present invention is preferably 2.5 mol % or more, more preferably 5 mol % or more, and further preferably 10 mol % or more.
The α-olefin polymer of the present invention can be produced by using a metallocene catalyst, especially preferably a double bridging-type transition metal compound that can synthesize an isotactic polymer.
Namely, it is a process for polymerizing one or more α-olefin having 6 or more carbon atoms or polymerizing one or more α-olefin having 6 or more carbon atoms with one or more other α-olefin in the presence of a polymerization catalyst comprising (A) a transition metal compound represented by the following general formula (I), and (B) at least one component selected from (B-1) a compound capable of forming an ionic complex by a reaction with the transition metal compound of the component(A) or a derivative thereof and (B-2) an aluminoxane compound.
[Fo:mula 2]

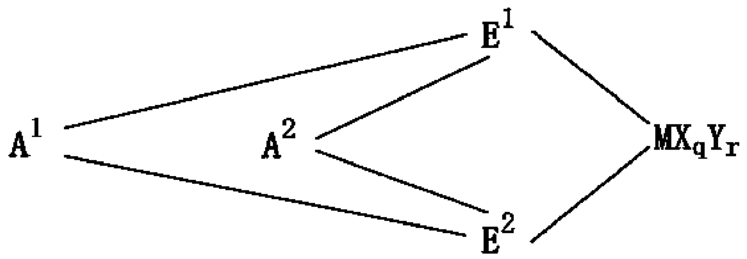

· · · (I)

(In the formula, M represents an element belonging to the groups 3 to 10 of the periodic table or a lanthanoid metal element, $E^1$ and $E^2$ each are a ligand selected from the group consisting of a substituted cyclopentadienyl group, an indenyl group, a substituted indenyl group, a heterocyclopentadienyl group, a substituted heterocyclopentadienyl group, an amide group, a phosphide group, a hydrocarbon group and a silicon-containing group, form a crosslinked structure through $A^1$ and $A^2$ and are identical or different; X represents a σ-bonding ligand, and if there is a plurality of Xs, they may be identical or different and may form a crosslinked structure with other X, $E^1$, $E^2$, Dr Y.
Y represents a Lewis base, and, if there is a plurality of Ys, they may be identical or different and may form a crosslinked structure with other Y, $E^1$, $E^2$, or X; $A^1$ and $A^2$ are bivalent crosslinking groups combining two ligands, represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or $-AlR^1-$, wherein $R^1$ represents a hydrogen atom, a halogen atom, a hydrocarbon group having 1 to 20 carbon atoms, or a halogen-containing hydrocarbon group having 1 to 20 carbon atoms, and are identical or different; q represents an integer of 1 to 5 and is equal to [(atomic valency of M] - 2] and r represents an integer of 0 to 3.)

In the above general formula (I), M represents an element belonging to the group 3 to 10 of the periodic table or a lanthanoid metal element, specifically titanium, zirconium, hafnium, yttrium, vanadium, chromium, manganese, nickel, cobalt, palladium, a lanthanoid metal element, and the like, and among them, titanium, zirconium and hafnium are preferable in view of the olefin coplymerization activity.
$E^1$ and $E^2$ each are a ligand selected from the group consisting of a substituted cyclopentadienyl group, an indenyl group, a substituted indenyl group, a heterocyclopentadienyl group, a substituted heterocyclopentadienyl group, an amide group (-N<), a phosphine group (-P<), a hydrocarbon group (>CR-, >C<) and a silicon-containing group (>SiR-, >Si<) (wherein, R represents hydrogen, a hydrocarbon group having 1 to 20 carbon atoms, or a heteroatom-containing group), and form a crosslinked structure through $A^1$ and $A^2$. $E^1$ and $E^2$ may be identical or different.
As $E^1$ and $E^2$, a substituted cyclopentadienyl group, an indenyl group, or a substituted indenyl group is preferable.

Also, X represents a σ-bonding ligand, and if there is a plurality of Xs, they may be identical or different and may form a crosslinked structure with other X, $E^1$, $E^2$, or Y.
Specific examples of X include a halogen atom, a hydrocarbon group having 1 to 20 carbon atoms, an alkoxy group having 1 to 20 carbon atoms, an aryloxy group having 6 to 20 carbon atoms, an amide group having 1 to 20 carbon atoms, a silicon-containing group having 1 to 20 carbon atoms, a phosphide group having 1 to 20 carbon atoms, a sulfide group having 1 to 20 carbon atoms, an acyl group having 1 to 20 carbon atoms, and the like.
On the other hand, Y represents a Lewis base, and if there is a plurality of Ys, they may be identical or different and may form a crosslinked structure with other Y, $E^1$, $E^2$, or X. Specific examples of the Lewis base Y include amines, ethers, phosphines, thioethers, and the like.

Further, $A^1$ and $A^2$ each are a bivalent crosslinking group which combines two ligands and represents a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or $-AlR^1-$ wherein $R^1$ represents a hydrogen atom, a halogen atom, a hydrocarbon group having 1 to 20 carbon atoms, or a halogen-containing hydrocarbon group having 1 to 20 carbon atoms, and are identical or different. As examples for such a crosslinking group, a group represented by the general formula may be cited.

[Formula 3]

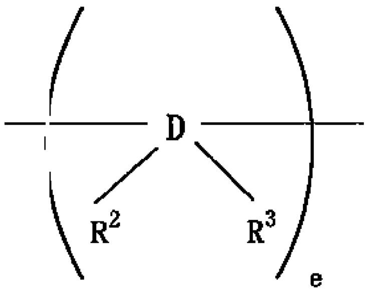

(D represents carbon, silicon, or tin; $R^2$ and $R^3$ each are a hydrogen atom or a hydrocarbon group having 1 to 20 carbon atoms and may be identical or different, or may form a cyclic structure by bonding with each other; e represents an integer of 1 to 4.) Specific examples include methylene, ethylene, ethylidene, propylidene, isopropylidene, cyclohexylidene, 1,2-cyclohexylene, vinylidene ($CH_2$=C=), dimethylsilylene, diphenylsilylene, methylphenylsilylene, dimethylgermylene, dimethylstanylene, tetramethyldisitylene, diphenyldisilylene, and the like.
Among them, ethylene, isopropylidene and dimethylsilylene are preferable.
In the formula, q represents an integer of 1 to 5 and is equal to [(atomic valency of VI) - 2] and r represents an integer of 0 to 3. Among the transition metal compounds represented by the general formula (I), a transition metal compound having a double crosslinked biscyclopentadienyl derivative as its ligand, as represented by the general formula (II), is preferable.
[Formula 4]

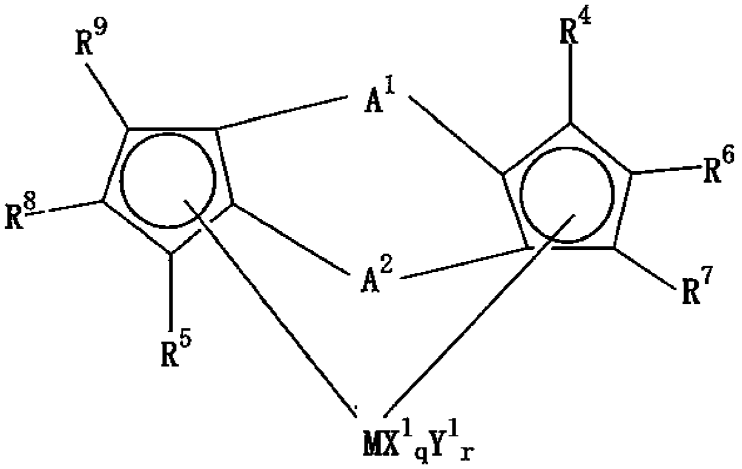

· · · (II)

In the above general formula (II), M, $A^1$, $A^2$, q and r are identical to those in the general formula (I). $X^1$ represents a σ-bonding ligand, and if there is a plurality of $X^1$s, they may be identical or different and may form a crosslinked structure with other $X^1$ or $Y^1$. As specific examples of $X^1$, the same groups as cited in the explanation of X in the general formula (I) may be cited.
$Y^1$ represents a Lewis base, and if there is a plurality of $Y^1$s, they may be identical or different and may form a crosslinked structure with other $Y^1$ or $X^1$. As specific examples of $Y^1$, the same groups as cited in the explanation of Y in the general formula (I) may be cited.
$R^4$ to $R^9$ each are a hydrogen atom, a halogen atom, a hydrocarbon group having 1 to 20 carbon atoms, a halogen-containing hydrocarbon group having 1 to 20 carbon atoms, a silicon-containing group, or a heteroatom-containing group, wherein at least one of them should not be hydrogen. $R^4$ to $R^9$ may be identical or different, and they may form a cyclic structure by bonding with each other when they are adjacent groups.

Particularly, it is preferable for $R^6$ and $R^7$ to form a cyclic structure, and so is for $R^8$ and $R^9$. As $R^4$ and $R^5$, groups that contain such heteroatoms as oxygen, halogen, or silicon are preferable, since they have high polymerization activity.

As the transition metal compound having the double crosslinked biscyclopentadienyl derivative as its ligand, the one that contains silicon in the crosslinking group between the ligands is preferable.

Specific examples of the transition metal compound shown in the general formula (I) include (1,2'-ethylene)(2,1'-ethylene)-bis(indenyl)zirconium dichloride, (1,2'-methylene)(2,1'-methylene)-bis(indenyl)zirconium dichloride, (1,2'-isopropylidene)(2,1'-isopropylidene)-bis(indenyl)zirconium dichloride, (1,2'-ethylene)(2,1'-ethylene)-bis(3-methylindenyl)zirconium dichloride, (1,2'-ethylene)(2,1'-ethylene)-bis(4,5-benzoindenyl)zirconium dichloride, (1,2'-ethylene)(2,1'-ethylene)-bis(4-isopropylindenyl)zirconium dichloride, (1,2'-ethylene)(2,1'-ethylene)-bis(5,6-dimethylindenyl)zirconium dichloride, (1,2'-ethylene)(2,1'-ethylene)-bis(4,7-diisopropylindenyl)zirconium dichloride, (1,2'-ethylene)(2,1'-ethylene)-bis(4-phenylindenyl)zirconium dichloride, (1,2'-ethylene)(2,1'-ethylene)-bis(3 -methyl-4-isopropylindenyl)zirconium dichloride, (1,2'-ethylene)(2,1'-ethylene)-bis(5,6-benzoindenyl)zirconium dichloride, (1,2'-ethylene)(2,1'-isopropylidene)-bis(indenyl)zirconium dichloride,

(1,2'-methylene)(2,1'-ethylene)-bis(indenyl)zirconium dichloride, (1,2'-methylene)(2,1'-isopropylidene)-bis(indenyl)zirconium dichloride, (1,2'-dimethylsilylene)(2,1'-dimethylsilylene)bis(indenyl)zirconium dichloride, (1,2'-dimethylsilylene)(2,1'-dimethylsilylene)bis(3-methylindenyl)zirconium dichloride, (1,2'-dimethylsilylene)(2,1'-dimethylsilylene)bis (3-n-butylindenyl)zirconium dichloride, (1,2'-dimetylsilylene)(2,1'-dimethylsilylene)bis(3-isopropylindenyl)zirconium dichloride, (1,2'-dimethylsilylene)(2,1'-dimethylsilylene)bis(3-trimethylsilylmethylindenyl) zirconium dichloride, (1,2'-dimethylsilylene)(2,1'-dimethylsilylene)bis(3-phenylindenyl)zirconium dichloride, (1,2'-dimethylsilylene)(2,1'-dimethylsilylene)bis(4,5-benzoindenyl)zirconium dichloride, (1,2'-dimethylsilylene)(2,1'-dimethylsilylene)bis(4-isopropylindenyl) zirconium dichloride, (1,2'-dimethylsilylene)(2,1'-dimethylsilylene)bis(5,6-dimethylindenyl)zirconium dichloride

(1,2'-dimethylsilylene)(2,1'-dimethylsilylene)bis(4,7-di-isopropylindenyl)zirconium dichloride, (1,2'-dimethylsilylene)(2,1'-dimethylsilylene)bis(4-phenylindenyl)zirconium dichloride, (1,2'-dimethylsilylene)(2,1'-dimethyisilyleneybis (3-methyl-4-isopropylindenyl) zirconium dichloride, (1,2'-dimethylsilylene)(2,1'-dimethylsilylene)bis(5,6-benzoindenyl) zirconium dichloride, (1,2'-dimethylsilylene](2,1'-isopropylidene)-bis(indenyl)zirconiurn dichloride, (1,2'-dimethylsilylene)(2,1'-isopropylidene)-bis(3-methylindenyl)zirconium dichloride, (1,2'-dimethylsilylene)(2,1'-isopropylidene)-bis(3-isopropylindenyl)zirconium dichloride, (1,2'-dimethylsilylene)(2,1'-isopropylidene)-bis(3-n-butylindenyl)zirconium dichloride, (1,2'-dimethylsilylene)(2,1'-isopropylidene)-bis(3-trimethylsilylmethylindenyl) zirconium dichloride, (1,2'-dimethylsilylene)(2,1'-isopropylidene)(3'-trimethylsilylindenyl)zirconium dichloride,

(1,2'-dimethylsilylene)(2,1'-isopropylidene)-bis(3-phenylindenyl)zirconium dichloride, (1,2'-dimethylsilylene) (2,1'-methylene)-bis(indenyl)zirconium dichloride, (1,2'-dimethylsilylene)(2,1'-methylene)-bis(3-methylindenyl)zirconium dichloride, (1,2'-dimethylsilylene)(2,1'-methylene)-bis(3-isopropylindenyl)zirconium dichloride, (1,2'-dimethylsilylene)(2,1'-methylene)-bis(3-n-butylindenyl)zircomum dichloride, (1,2'-dimethylsilylene)(2,1'-methylene)-bis(3-trimethylsilylmethylindenyl)zirconium dichloride, (1,2'-dimethylsilylene)(2,1'-methylene)-bis(3-trimethylsilylindenyl)zirconium dichloride, (1,2'-diphenylsilylene)(2,1'-methylene)-bis(indenyl)zirconium dichloride, (1,2'-diphenylsilylene)(2,1'-methylene)-bis(3-methylindenyl)zirconium dichloride, (1,2'-diphenylsilylene)(2,1'-methylene)-bis(3-isopropylindenyl)zirconium dichloride, (1,2'-diphenylsilylene)(2,1'-methylene)-bis(3-n-butylindenyl)zirconium dichloride,

(1,2'-diphenylsitylene)(2,1'-methylene)-bis(3-trimetylsilylmethylindenyl)zirconium dichloride, (1,2'-diphenylsilylene)(2,1'-methylene)-bis(3-trimethylsilylindenyl)zirconium dichloride, (1,2'-dimethylsilylene)(2,1'-dimethylsilylene)(3 -methylcyclopentadienyl) (3'-methylcyclopentadienyl)zircunium dichloride, (1,2'-dimethylsilylene)(2,1'-isopropylidene) (3-methylcyclopentadienyl) (3'-methylcyclopentadienyl)zirconium dichloride, (1,2'-dimethylsilylene)(2,1'-ethylene)(3-methylcyclopentadienyl) (3'-methylcyclopentadienyl)zirconium dichloride, (1,2,-ethylene)(2,1'-methylene)(3-methylcyclopentadienyl)(3'-methylcyclopentadienyl) zirconium dichloride, (1,2'-ethylene)(2,1'-isopropylidene)(3-methylcyclopentadienyl) (3'-methylcyclopentadienyl)zirconium dichloride, (1,2'-methylene)(2,1'-methylene)(3-methylcyclopentadienyl) (3'-methylcyclopentadienyl)zirconium dichloride, (1,2 -methylene)(2,1'-isopropylidene)(3-methylcyclopentadienyl) (3'-methylcyclopentadienyl)zirconium dichloride,

(1,2'-isopropylidene)(2,1'-isopropylidene)(3-methylcyclopentadienyl) (3'-methylcyclopentadienyl)zirconium dichloride, (1,2'-dimethylsilylene)(2,1'-dimetylsilylene)(3,4-dimethylcyclopentadienyl) (3',4'-dimethylcyclopentadienyl) zirconium dichloride, (1,2'-dimethylsilylene)(2,1'-isopropylidene)(3,4-dimethylcyclopentadienyl) (3',4'-dimethylcyclopentadienyl)zirconium dichloride, (1,2'-dimethylsilylene)(2,1'-ethylene)(3,4-dimethylcyclopentadienyl) (3',4'-dimethylcyclopentadienyl)zirconium dichloride, (1,2'-ethylene)(2,1'-methylene)(3,4-dimethylcyclopentadienyl) (3',4'-dimethylcyclopentadienyl)zirconium dichloride, (1,2'-ethylene)(2,1'-isopropylidene)(3,4-dimethylcyclopentadienyl) (3',4'-dimethylcyclopentadienyl)zirconium dichloride, (1,2'-methylene)(2,1'-methylene)(3,4-dimethylcyclopentadienyl) (3',4'-dimethylcyclapentadienyl)ziurconium dichloride,

(1,2'-methylene)(2,1'-isopropylidene)(3,4-dimethylcyclopentadienyl) (3',4'-dimethylcyclopentadienyl)zirconium dichloride, (1,2'-isopropylidene)(2,1'-isopropylidene)(3,4-dimethylcyclopentadienyl) (3',4'-dimethylcyclopentadienyl) zirconium dichloride, (1,2'-dimethylsilylene)(2,1'-dimethylsilylene)(3-methyl-5-ethylcyclopentadienyl) (3'-methyl-5'-ethylcyclopentadienyl)zirconium dichloride, (1,2'-dimethylsilylene)(2,1'-dimethylsilylene)(3-methyl-5-ethylcyclopentadienyl) (3'- methyl-5'-ethylcyclopentadienyl)zirconium dichloride, (1,2'-dimethylsilylene)(2,1'-dimethylsilylene)(3-methyl-5-isopropylcyclopentadienyl) (3'- methyl-5'-isopropylcyclopentadienyl)zirconium dichloride, (1,2'-dimethylsilylene)(2,1'-dimethylsilylene)(3-methyl-5-n-butylcyclopentadienyl) (3'-methyl-5'-n-butylcyclopentadienyl)zirconium dichloride, (1,2'-dimethylsilylene)(2,1'-dimethylsilylene)(3-methyl-5-phenylcyclopentadienyl) (3'-methyl-5'-phenylcyclopentadienyl)zirconium dichloride,

(1,2'-dimethylsilylene)(2,1'-isopropylidene)(3-methyl-5-ethylcyclopentadienyl) (3'-methyl-5'-ethylcyclopentadienyl)zircomum dichloride, (1,2'-dimethylsilylene)(2,1'-isopropylidene)(3-methyl-5-isopropylcyclopentadienyl) (3'-methyl-5'-isopropylcyclopentadienyl)zirconium dichloride, (1,2'-dimethylsilylene)(2,1'-isopropylidene)(3-methyl-5-n-butylcyclopentadienyl) (3'-methyl-5'-n-butylcyclopentadienyl)zirconium dichloride, (1,2'-dimethylsilylene)(2,1'-isopropylidene)(3-methyl-5-phenylcyclopcntadienyl) (3'-methyl-5'-phenylcyclopentadienyl)zirconium dichloride, (1,2'-dimethylsilylene)(2,1'-ethylene)(3-methyl-5-ethylcyclopentadienyl) (3'-methyl-5'-ethylcyclopentadienyl)zirconium dichloride, (1,2'-dimethylsilylene)(2,1'-ethylene)(3-methyl-5-isopropylcyclopentadienyl) (3'-methyl-5'-isopropylcyclopentadienyl)zirconium dichloride, (1,2'-dimethylsilylene)(2,1'-ethylene)(3-methyl-5-n-butylcyclopentadienyl) (3'-methyl-5'-n-butylcyclopentadienyl)zirconium dichloride,

(1,2'-dimethylsilylene)(2,1'-ethylene)(3-methyl-5-phenylcydopentadienyl) (3'-methyl-5'-phenylcyclopentadienyl)zirconium dichloride, (1,2'-dimethylsilylene)(2,1'-methylene)(3-methyl-5-ethylcyclopentadienyl) (3'-methyl-5'-ethylcyclopentadienyl)zirconium dichloride, (1,2'-dimethylsilylene)(2,1'-methylene)(3-methyl-5-isopropylcyclopentadienyl) (3'-nethyl-5'-isopropylcydopentadienyl)zirconium dichloride, (1,2'-dimethylsilylene)(2,1'-methylene)(3-methyl-5-n-butylcyclopentadienyl) (3'-nethyl-5'-n-butylcyclopentadienyl)zirconium dichloride, (1,2'-dimethylsilylene)(2,1'-methylene)(3-methyl-5-phenylcyclopentadienyl) (3'-methyl-5'-phenylcyclopentadienyl)zirconium dichloride, (1,2'-ethylene)(2,1'-methylene)(3-methyl-5-isopropylcyclopentadienyl) (3'-methyl-5'-isopropylcyclopentadienyl)zirconium dichloride, (1,2'-ethylene)(2,1'-isopropylidene)(3-methyl-5-isopropylcyclopentadienyl) (3'-methyl-5'-isopropylcyclopentadienyl)zircomium dichloride,

(1,2'-methylene)(2,1'-methylene)(3-methyl-5-isopropylcyclopentadienyl) (3'-methyl-5'-isopropylcyclopentadienyl)zirconium dichloride, (1,2'-methylene)(2,1'-isopropylidene)(3-methyl-5-isopropylcyclopentadienyl) (3'-methyl-5'-isopropylcyclopentadienyl)zirconium dichloride, (1,1'-dimethylsilylene)(2,2'-dimethylsilylene)bisindenylzirconium dichloride, (1,1'-diphenylsilylene)(2,2'-dimethylsilylene)bisindenylzirconium dichloride, (1,1'-dimethylsilylene)(2,2'-dimethylsilylene)bisindenylzirconium dichloride, (1,1'-diisopropylsilylene)(2,2'-dimethylsilylene)bisindenylzirconium dichloride, (1,1'-dimethylsilylene)(2,2'-diisopropylsilylene)bisindenylzirconium dichloride, (1,1'-dimethylsilyleneindenyl)(2,2'-dimethylsilylene-3-trimethylsilylindenyl)zirconium dichloride, (1,1'-diphenylsilyleneindenyl)(2,2'-diphenylsilylene-3-trimethylsilylindenyl)zirconium dichloride, (1,1'-diphenylsilyleneindenyl)(2,2'-dimethylsilylene-3-trimethylsilylindenyl)zirconium dichloride,

(1,1'-dimethylsilylene)(2,2'-dimethylsilylene)(indenyl)(3-trimethylsilylindenyl) zirconium dichloride, (1,1'-diphenylsilylene)(2,2'-diphenylsilylene)(indenyl)(3-trimethylsilylindenyl) zirconium dichloride, (1,1'-diphenylsilylene)(2,2'-dimethylsilylene)(indenyl)(3-trimethylsilylindenyl) zirconium dichloride, (1,1'-dimethylsilylene)(2,2'-diphenylsilylene)(indenyl)(3-trimethylsilylindenyl) zirconium dichloride, (1,1'-diisopropylsilylene)(2,2'-dimethylsilylene)(indenyl)(3-trimethylsilylindenyl) zirconium dichloride, (1,1'-dimethylsilylene)(2,2'-diisopropylsilylene)(indenyl)(3-trimethylsilylindenyl) zirconium dichloride, (1,1'-diisopropylsilylene)(2,2'-diisopropylsilylene)(indenyl)(3-trimethylsilylindenyl) zirconium dichloride, (1,1'-dimethylsilylene)(2,2'-dimethylsilylene)(indenyl)(3-trimethylsilymethylindenyl) zirconium dichloride, (1,1'-diphenylsilylene)(2,2'-diphenylsilylene)(indenyl)(3-trimethylsilylmethylindenyl) zirconium dichloride,

(1,1'-diphenylsilylene)(2,2'-dimethylsilylene)(indenyl)(3-trimethylsilylmethylindenyl) zirconium dichloride, (1,1'-dimethylsilyiene)(2,2'-diphenylsilylene)(indenyl)(3-trimethylsilylmethylindenyl) zirconium dichloride, (1,1'-diisopropylsilylene)(2,2'-dimethylsilylene)(indenyl) (3-trimethylsilylmethylindenyl)zirconium dichloride, (1,1'-dimethylsilylene)(2,2'-diisopropylsilylene)(indenyl) (3-trimethylsilylmethylindenyl)zirconium dichloride, (1,1'-diisopropylsilylene)(2,2'-diisopropylsilylene)(indenyl) (3-trimethylsilylmethylindenyl)zirconium dichloride, and the like, and the compounds in which zirconium in the above compounds is replaced by titanium or hafnium. As a matter of course, they are not limited to these compounds. In addition, similar compounds having elements belonging to other groups or the lanthanoid metal elements may also be suitable.
Furthermore, in the above compounds, (1,1'-) (2,2'-) may be (1,2'-)(2,1'-), and (1,2'-)(2,1'-) may be (1,1'-)(2,2'-).

Further, as the component (B-1) in the component (B), any compounds capable of forming an ionic complex by the reaction with transition metal compounds of the above component (A) may be used, though the compound represented by the following general formula (III) and (IV) may be preferably used.

$$([L^1\text{-}R^{10}]^{k+})_a([Z]^-)_b \quad ....... \qquad (III)$$

$$([L^2]^{k+})_a([Z]^-)_b \quad ..... \qquad (IV)$$

(here, $L^2$ represents $M^2$, $R^{11}R^{12}M^3$, $R^{13}{}_3C$, or $R^{14}M^3$.)

In the formula (III) and (IV), $L^1$ represents a Lewis base, $[Z]^-$ represents a non-coordinating anion $[Z^1]^-$ or $[2^2]^-$, wherein $[Z^1]^-$ represents an anion in which plural groups are bonded to an element, namely, $[M^1G^1G^2\cdots G^f]^-$, (here, $M^1$ represents an element belonging to the groups 5 to 15 of the periodic table, preferably an element belonging to the groups 13 to 15 of the periodic table. $G^1$ to $G^f$ each represent a hydrogen atom, a halogen atom, an alkyl group having 1 to 20 carbon atoms, a dialkylamino group having 2 to 40 carbon atoms, an alkoxy group having 1 to 20 carbon atoms, an aryl group having 6 to 20 carbon atoms, an aryloxy group having 6 to 20 carbon atoms, an alkylaryl group having 7 to 40 carbon atoms, an arylalkyl group having 7 to 40 carbon atoms, a halogen-substituted hydrocarbon group having 1 to 20 carbon atoms, an acyloxy group having 1 to 20 carbon atoms, an organic metalloid group, or a heteroatom-containing hydrocarbon group having 2 to 20 carbon atoms. Two or more groups of $G^1$ to $G^f$ may form a ring structure. Here, f represents an integer equal to [(valency of a central metal $M^1$) + 1].) $[Z^2]^-$ represents a conjugated base of only a Brønsted acid having a value of -10 or less in terms of logarithm of inverse number of its acid-dissociation constant (pKa) or of a combination of a Brønsted acid and a Lewis acid, or a conjugated base of an acid generally defined as a superacid. It may be also coordinated with a Lewis base. Further, $R^{10}$ represents a hydrogen atom, an alkyl group having 1 to 20 carbon atoms, an aryl group having 6 to 20 carbon atoms, an alkylaryl group, or an arylalkyl group; $R^{11}$ and $R^{12}$ each represent a cyclopentadienyl group, a substituted cyclopentadienyl group, an indenyl group, or a fluorenyl group; $R^{13}$ represents an alkyl group having 1 to 20 carbon atoms, an aryl group, an alkylaryl group, or an arylalkyl group; $R^{14}$ represents a macrocyclic ligand such as tetraphenylporphyrin, phthalocyanine and the like; k represents the ionic valency of $[L^1\text{-}R^{10}]$ and $[L^2]$ and is an integer of 1 to 3; a represents an integer of 1 or higher; b = (k × a). $M^2$ includes an element belonging to the groups 1 to 3, 11 to 13, and 17 of the periodic table, and $M^3$ represents an element belonging to the groups 7 to 12 of the periodic table.

Here, specific examples of $L^1$ include amines such as ammonia, methylamine, aniline, dimethylamine, diethylamine, N-methylaniline, diphenylamine, N,N-dimethylaniline, trimethylamine, triethylamine, tri-n-butylamine, methyldiphenylamine, pyridine, p-bromo-N,N-diemthylaniline, p-nitro-N,N-dimethylaniline and the like, phosphines such as triethylphosphine, triphenylphosphine, diphenylphosphine and the like, thioethers such as tetrahydrothiophene and the like, esters such as ethyl benzoate and the like, nitriles such as acetonitrile, benzonitrile and the like.

Specific examples of $R^{10}$ include hydrogen, methyl, ethyl, benzyl, trityl and the like, and as specific examples of $R^{11}$ and $R^{12}$, cyclopentadienyl, methylcyclopentadienyl, ethylcyclopentadienyl, pentamethylcyclopentadienyl and the like.

Specific examples of $R^{13}$ include phenyl, p-tolyl, p-methoxyphenyl and the like, and as specific examples of $R^{14}$, tetraphenylporphyrin, phthalocyanine, allyl, methallyl and the like.

Further, specific examples of $M^2$ include Li, Na, K, Ag, Cu, Br, I, $I_3$ and the like, and specific examples of $M^3$ include Mn, Fe, Co, Ni, Zn and the like.

In $[Z^1]^-$, namely, in $[M^lG^1G^2...G^f]$, specific examples of $M^1$ include B, Al, Si, P, As, Sb, and the like. Among them, B and Al may be cited as preferable examples.

Further, specific examples of $G^1G^2$---$G^f$ include dialkylamino groups such as dimethylamino, diethylamino and the like, alkoxy or aryloxy groups such as methoxy, ethoxy, n-butoxy, phenoxy and the like, hydrocarbon groups such as methyl, ethyl, n-propyl, isopropyl, n-butyl, isobutyl, n-octyl, n-eicosyl, phenyl, p-tolyl, benzyl, 4-t-butylphenyl, 3,5-dimethylphenyl and the like, halogen atoms such as fluorine, chlorine, bromine and iodine, heteroatom-containing groups such as p-fluorophenyl, 3,5-difluorophenyl, pentachlorophenyl, 3,4,5-trifluorophenyl, pentafluorophenyl, 3,5-bis(trifluoromethyl)phenyl, bis(trimethylsilyl)methyl and the like, organic metalloid groups such as pentamethylantimonyl, trimethylsilyl, trimethylgermyl, diphenylarsenyl, dicyclohexylantimonyl, diphenylboron and the like.

Specific examples of the non-coordinating anion, namely, the conjugated base $[Z^2]^-$ which is a Brønsted acid having pKa of -10 or less, or a combination of the Brønsted acid and a Lewis acid, include trifluoromethanesulfonate anion $(CF_3SO_3)'$, bis(trifluoromethanesulfonyl)methyl anion, bis(trifluoromethanesulfonyl)benzyl anion, bis(trifluoromethanesulfonyl)amide, perchlorate anion $(ClO_4)^-$, trifluoroacetate anion $(CF_3CO_2)^-$, hexafluoroantimonyl anion $(SbF_6)$, fluorosulfonate anion $(FSO_3)^-$, chlorosulfonate anion $(ClSO_3)^-$, fluorosulfonate anion/5-fluoroantimony $(FSO_3/SbF_5)^-$, fluorosulfonate anion/5-fluoroarsenic $(FSO_3/AsF_5)^-$, trifluoromethanesulfonate anion/5-fluoroantimony $(CF_3SO_3/SbF_5)^-$.

Specific examples of the ionic compounds that produce ionic complexes by the reaction with the transition metal compounds of the component (A), namely, the compounds of the component (B-1), include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinum tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate,

trimethylanilinium tetrakis(pentafluorophenyl)borate, methylpyridinium tetrakis(pentafluorophenyl)borate,

benzylpyridinium tetrakis(pentafluorophenyl)borate, methyl(2-cyanopyridinium) tetrakis(pentafluorophenyl)borate, benzyl(2-cyanopyridinium) tetrikis(pentafluorophenyl)borate, methyl(4-cyanopyridinium) tetrakis(pentafluvrophenyl)borate, triphenylphosphonium tetrakis(pentafluorophenyl)borate, dimethylanilinium tetrakis[bis(3,5-ditrifluoromethyl) phenyl]borate, ferrocenium teraphenylborate, silver tetraphenylborate, trityl tetraphenylborate, tetraphenylporphyrinmanganese tetraphenylborate, ferrocenium tetrakis(pentafluorophenyl)borate, (1,1'-dimahylferrocenium) tetrakis(pentafluorophenyl)borate, decamethylferrocenium tetrakis(pentafluorophenyl)borate, silver tetrakis(pentafluorophenyl)borate, trityl tetrakis(pentafluarophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluorophosphate, silver hexafluoroarsenate, silver perchlorate, silver trifluoroacetate, silver trifluoromethanesulfonate, and the like. These components (B-1) may be used solely or in a combination of two kinds or more.
On the other hand, the aluminoxane of the component (B-2) includes a linear aluminoxane represented by the general formula (V)

[Formula 5]

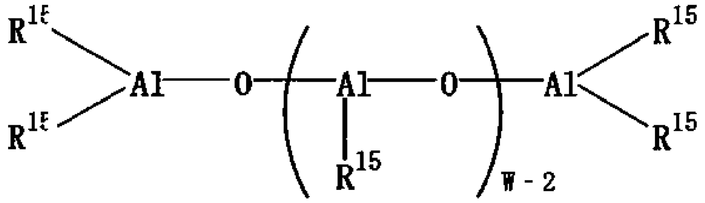

· · · (V)

(in the formula, $R^{15}$ represents a hydrocarbon group such as an alkyl group, an alkenyl group, an aryl group, an arylalkyl group and the like, each of which having 1 to 20 carton atoms, or preferably 1 to 12 carbon atoms or a halogen atom; w represents the average degree of polymerization and is an integer of usually 2 to 50, preferably 2 to 40. Here, each $R^{15}$ may be identical or different), or a cyclic aluminoxane represented by the general formula (VI).

[Formula 6]

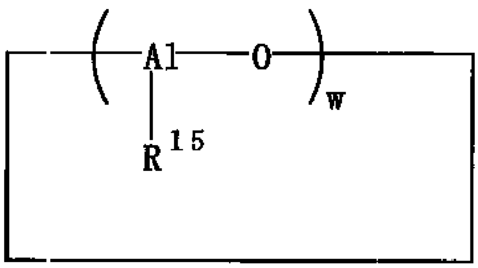

· · · (VI)

(In i:he formula, $R^{15}$ and w are the same as those in the general formula (V).)

To produce the above-described aluminoxanes, a method of contacting an alkylaluminum with a condensing agent such as water and the like may be cited, though the means therefor is not particularly restricted, and the reaction may be performed in any publicly known manners.
For example, such methods include: (a) a method of dissolving an organic aluminum compound in an organic solvent, and the resulting solution is contacted with water, (b) a method of initially adding an organic aluminum compound to the polymerization system, to which water is added subsequently, (c) a method of reacting an organic aluminum compound with crystal water contained in metal salts and the like, or water absorbed on inorganic or organic substances, (d) a method of reacting a tetraalkyldialuminoxane with a trialkylaluminum and then with water, and other methods. The

aluminoxanes may be insoluble in toluene. These aluminoxanes may be used solely or in a combination of two kinds or more.

The ratio of the catalyst component (A) to the catalyst component (B) is, when the compound (B-1) is used as the catalyst component (B), preferably between 10:1 and 1:100, and more preferably between 2:1 and 1:10 in the molar ratio. Within the above range, it is practical since the catalyst cost per unit weight of the polymer is not too high.
When the compound (B-2) is used, the molar ratio is preferably between 1:1 and 1:1000000, and more preferably between 1:10 and 1:10000. Within this range, it is practical since the catalyst cost per unit weight of polymer is not too high.
As the catalyst component (B), (B-1) and (B-2) may be used solely or in a combination of two kinds or more.

As the polymerization catalyst for production of the α-olefin polymer in the present invention, an organic aluminum compound may be used as a component (C) in addition to the component (A) and the component (B).
Here, as the organic aluminum compound of the component (C), the compound represented by the general formula (VII) may be used.

$$R^{16}{}_{v}AlJ_{3-v} \text{.......} \qquad \text{(VII)}$$

[In this formula, $R^{16}$ represents an alkyl group having 1 to 10 carbon atoms, and J represents a hydrogen atom, an alkoxy group having 1 to 20 carbon atoms, an aryl group having 6 to 20 carbon atoms, or a halogen atom, where v represents an integer of 1 to 3.]
Specific examples of the compound represented by the general formula (VII) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride, and the like. These organic aluminum compounds may be used solely or in a combination of two kinds or more.

The ratio of the catalyst component (A) to the catalyst component (C) is preferably between 1:1 and 1:10000, more preferably between 1:5 and 1:2000, or further preferably between 1:10 and 1:1000 in the molar ratio.
By using the catalyst component (C), polymerization activity per unit transition metal may be improved, and by limiting the use ratio within the above ranges, the organic aluminum compound is neither wasted nor remains substantially in the α-olefin polymer.
To produce the α-olefin polymer of the present invention, one or more catalyst component may be supported on a suitable carrier. The type of the carrier is not particularly limited, and any of inorganic oxide carriers, any other inorganic or organic carriers may be used, though the inorganic oxide carriers or other inorganic carriers are preferable.

In the α-olefin polymer of the present invention, the polymerization method is not particularly limited, and thus any method such as slurry polymerization, gas-phase polymerization, bulk polymerization, solution polymerization, suspension polymerization and the like may be used, though slurry polymerization and gas-phase polymerization are particularly preferred.
As to the polymerization conditions, the temperature range of polymerization is usually between -100 and 250° C, preferably between -50 and 200°C, and more preferably between 0 and 130°C. The range of polymerization time is usually between 5 minutes and 10 hours, and the polymerization pressure is preferably between ordinary pressure and 20 MPa (gauge), and more preferably between ordinary pressure and 10 MPa (gauge).

In the method for producing the α-olefin polymer of the present invention, addition of hydrogen is preferred because it enhances the polymerization activity. When hydrogen is used, the pressure range is usually between ordinary pressure and 5 MFa (gauge), preferably between ordinary pressure and 3 MPa (gauge), and more preferably between ordinary pressure and 2 MPa (gauge).
When a solvent is used in the polymerization, there may be used, for example, aromatic hydrocarbons such as benzene, toluene, xylene, ethylbenzene and the like, alicyclic hydrocarbons such as cyclopentane, cyclohexane, methylcyclohexane and the like, aliphatic hydrocarbons such as pentane, hexane, heptane, octane and the like, halogenated hydrocarbons such as chloroform, dichloromethane and the like. These solvents may be used solely or in a combination of two kinds or more. Further, a monomer such as an α-olefin may be used as the solvent. Depending on the polymerization method, polymerization may be performed without solvents.

The polymerization may be preceded by pre-polymerization by using the above described polymerization catalyst. The pre-polymerization can be performed, for example, by contacting a small amount of an olefin with the solid catalyst component. The method is not particularly limited and any publicly known method can be used.
The olefin to be used in the pre-polymerization is not particularly limited, and may include similar ones exemplified in the above, for example, ethylene, an olefin having 3 to 20 carbon atoms, or a mixture thereof, though the same α-olefin used in the polymerization is advantageously used.

The temperature range of the pre-polymerization is usually between -20 and 200°C, preferably between -10 and 130°C, and more preferably between 0 and 80°C.
In the pre-polymerization, a solvent such as an aliphatic hydrocarbon, an aromatic hydrocarbon, a monomer and the

like can be used. Among them, particularly preferred solvents are aliphatic hydrocarbons. The pre-polymerization may be carried out without solvents.
The conditions of pre-polymerization may be preferably controlled in such a way that the intrinsic viscosity [η] (measured in decalin at 135°C) of the pre-polymerization product is 0.1 deciliter/g or more and the amount of the pre-polymerization product per 1 mmol of the transition metal component in the catalyst is between 1 and 10000 g, particularly between 10 and 1000 g.
Further, adjustment of the molecular weight of the α-olefin polymers may be performed by selecting the type of each catalyst component, its quantity and polymerization temperature, and in addition, by performing the polymerization in the presence of hydrogen. It may be also carried out in the presence of an inert gas such as nitrogen and the like.
By using the above methods, an α-olefin polymer having good properties in low-temperature characteristics, rigidity, heat-resistance, miscibility with a lubricating oil, mixing properties with an inorganic filler and secondary processability can be obtained in high efficiency.

The crosslinked olefin polymer of the present invention can be produced by reading the α-olefin polymer obtained by the above-described methods with a crosslinking agent. The methods to crosslink polyethylene can be also applied to the crosslinking reaction to produce the crosslinked polymer of the present invention, wherein they include the use of a radical-generating agent and the electron beam irradiation.
The radical-generating agent is not specifically limited, though in view of workability the agent that decomposes to generate radicals at the temperature of 60°C or more is preferred. The radial-generating agent can be selected appropriately from publicly known radical-generating agents such as any organic peroxide, azo compounds including azobisisobutyronitrile, azobisisovaleronitrile and the like. Among them, organic peroxides are most preferred in view of the decomposition temperature, easy handling, storage stability, and so on.
The organic peroxide includes diacylperoxides such as dibenzoylperoxide, di-3,5,5-trimethylhexanaylperoxide, dilauroylperoxide, didecanoylperoxide, di(2,4-dichlorobenzoyl)peroxide and the like; hydroperoxides such as t-butylhydroperoxide, cumenehydroperoxide, diisopropylbenzenehydroperoxide, 2,5-dimethylhexane-2,5-dihydroperoxide and the like; dialkylperoxides such as di-t-butylpeoxide, dicumylperoxide, 2,5-dimethyl-2,5-dz(t-butylperoxy)hexane, 2,5-dimethyl-2,5-di(t-butylperoxy)hexyne-3, α,α'-bis(t-butylperoxy)diisopropylbenzene and the like; peroxyketals such as 1,1-bis-t-butylperoxy-3,3,5-trimethylcyclohexane, 2,2-bis(t-butylperoxy)butane and the like; alkyl peresters such as t-butyl peroxyoctoate, t-butyl peroxypivalate, t-butyl peroxyneodecanoate, t-butyl peroxybenzoate and the like; peroxycarbonates such as di-2-ethylhexylperoxydicarbonate, diisopropylperoxydicarbonate, di-sec-butylperoxydicarbonate, t-butylperoxyisopropylcarbonate and the like; and others. Among them, dialkylperoxides are preferable. Further, they may be used solely or in a combination of two kinds or more.

The amount of the radical-generating agent to be used is not particularly limited and is appropriately determined depending on desired properties of a targeted crosslinked olefin polymer, though it is usually 0.01 to 10 parts by mass or preferably 0.01 to 5 parts by mass relative to 100 parts of the α-olefin polymer to be used. When the amount to be used is 0.01 parts by mass or more, the degree of crosslinking is sufficient so that the effects of crosslinking can be expressed. On the other hand, when the amount is 10 parts by mass or less, the degree of crosslinking is appropriate so that formation of a gel-like substance is suppressed, and thus advantageous from the industrial view point since handling becomes easy and the removal process of the residual radical-generating agent is not necessary.
The radical-generating agent may be used in a liquid or solid state as it is, though it may be also used by dissolving or suspending in an organic solvent, when necessary for the safety reason. In such cases, the solvent is selected depending on the reaction temperature, and solvents such as hexane, heptane, octane, decane, toluene, xylene, cyclohexane and the like are used.
By the crosslinking reaction using the radical-generating agent, a crosslinked olefin polymer having the α-olefin polymer having an increased molecular weight can be obtained. Generally, when more radical-generating agent is used, the effect of the molecular weight increase is greater. However, this crosslinking reaction competes with a decomposition reaction, a side reaction of the crosslinking reaction, therefore depending on the amount of the radical-generating agent to be used and selection of the α-olefin polymer, the decomposition reaction prevails, and thus may result in the decrease in the molecular weight.
In most cases, the main peak appearing in the GPC measurement in the raw material α-olefin polymer is shifted toward a lower molecular weight side. In spite of such shift, the high molecular weight component produced by the crosslinking reaction enhances the total molecular weight, resulting in the increase of the weight-average molecular weight (Mw) as a whole.

The method for performing crosslinking is not particularly restricted, and, for example, there may be used such methods as a continuous melt kneading method to react the α-olefin polymer with the radical-generating agent by using a roll mill, a Banbury mixer, an extrusion equipment, and so on, or a batch reaction method without solvents or in a suitable solvents: hydrocarbon solvent such as butane, pentane, hexane, heptane, cyclohexane, toluene and the like; a halogenated hydrocarbon solvent such as chlorobenzene, dichlorobenzene, trichlorobenzene and the like; or a liquefied α-olefin.

When using an extrusion equipment, the reaction can be carried out at the temperature of 80 to 300°C with the residence time of 1 minute to 1 hour. The radical-generating agent may be pre-mixed, but it may be also continuously introduced into the extrusion equipment along with the α-olefin polymer.
When carrying out the crosslinking reaction in a batch process, the reaction temperature is approximately in the range of 0 to 250°C and the reaction time is approximately in the range of 5 minutes to 24 hours. When using a solvent, concentration of the α-olefin polymer is in the range of 10 to 80 % by mass.
In the case of a batch reaction, a one-tank batch system is possible, but a continuous process is also possible in which two or more tanks connected in series are employed.

After the crosslinking reaction, the produced crosslinked olefin polymer is recovered, if needed, by removing the residual radical-generating agent and the solvent by heating under reduced pressure. It is also possible to ship the produced crosslinked olefin polymer as a commercial product without such a process, after adjusting to an appropriate concentration.
The crosslinked olefin polymer of the present invention may be dissolved in a suitable solvent. Since a usual crosslinked polymer is not soluble in a solvent, the measurement by the GPC method is not possible. However, the crosslinked polymer of the present invention is soluble in an appropriate solvent since it is based on the α-olefin polymer having a low molecular weight.
Such solvent specifically includes halogenated hydrocarbons such as 1,2,4-trichlorobenzene, 1,2-dichloroethane, 1,1,1-trichloroethane and the like, alicyclic hydrocarbons such as cyclohexane, methylcyclohexane and the like, aromatic hydrocarbons such as toluene, xylene, ethylbenzene and the like, and others.

## Examples

In the following, the present invention is described further in detail, though it is not restricted at all by these examples. Here, physical properties of the obtained polymer are evaluated by the following methods.

### (1) Measurement method of GPC

By the following instruments and conditions, the weight-average molecular weight (Mw) and the number-average molecular weight (Mn) in terms of polystyrene were measured, from which a molecular weight distribution (Mw/Mn) was calculated.
GPC instrument:

Column: TOSO GMHHR-H(S)HT
Detector: RI detector for liquid chromatography WATERS 150C

Measurement conditions:

Solvent: 1,2,4-trichlorobenzene
Temperature: 145°C
Flow rate: 1.0 milliliter/minute
Sample concentration: 2.2 mg/milliliter
Injection volume: 160 microliter
Calibration curve: Universal Calibration
Analysis program: HT-GPC (Ver. 1.0)

### (2) DSC measurement

By using a differential scanning calorimeter [DSC-7 manufactured by PerkinElmer, Inc.), 10 mg of a sample was kept at 190°C for 5 minutes in a nitrogen atmosphere, cooled to -80°C at the cooling rate of 5°C/minute, kept at -80°C for 5 minutes, and then heated to 190°C at the heating rate of 10°C/minute to obtain a melting curve. The peak top (melting point, Tm) observed from the melting curve was taken as the indicator of heat-resistance. The heat-resistance was rated excellent when the measured melting point was higher. At the same time, the endothermic value at melting (ΔH) was taken as the indicator of rigidity. The rigidity was rated excellent when the endothermic value was larger. Further, the full width at half maximum of the temperature peak (Wm) was obtained from the above-mentioned melting endothermic curve.

(3) M4 and MR indicators of stereoregularity

These values were obtained in accordance with the method proposed in the paper [Macromolecules, 24, 2334 (1991)] reported by T. Asakura, M. Demura, Y. Nishiyama. Namely, they can be obtained by utilizing the observation that, in a $^{13}C$-NMR. spectrum, the absorption peaks assignable to the $CH_2$ carbon atom at the $\alpha$-position of a side chain are split, reflecting the difference in stereoregularity, A smaller M4 value indicates lower isotacticity and a larger MR value indicates higher degree of disorder in stereoregularity. Here, the $^{13}C$-NMR spectra were measured by the following instrument and conditions.

Instrument: EX-400 manufactured by JEOL Ltd.
Temperature: 130°C
Pulse width: 45°
The number of accumulation cycles: 1000
Solvent: a mixture of 1,2,4-trichlorobenzene and benzene-d6 with the ratio of 90 to 10 by volume

The M4 and MR indicators of stereoregularity were obtained as follows.
Namely, six large absorption peaks attributable to the mixed solvent are observed between 127 and 135 ppm. Among these peaks, the fourth peak from the lower side in the magnetic field is marked at 131.1 ppm and assigned the standard of the chemical shift. Under these conditions, the absorption peak assignable to the $CH_2$ carbon atom at the $\alpha$-position of a side chain is observed approximately between 34 and 37 ppm. Then, M4 (mol %) and MR (mol %) are obtained by using the following equations.

$$M4 = [(\text{integral intensity between 36.2 and 35.3 ppm})/(\text{integral intensity between 36.2 and 34.5 ppm})] \times 100$$

$$MR = [(\text{integral intensity between 35.3 and 35.0 ppm})/(\text{integral intensity between 36.2 and 34.5 ppm})] \times 100$$

(4) Toughness and moldability

Sample material was placed between a set of stainless steel spacers having a space of 100 mm (length) × 100 mm (width) × 0.1 mm (thickness) and then hot-pressed to obtain a molded article, of which toughness and moldability were then assessed.
The temperature during the molding was 100°C and the sample was molten in about 3 minutes. When the sample has its melting point, the temperature of the mold is preferably about 60°C above the melting point. After the plates were pressed step-wise till 5 MPa in about 1 minute, the pressure was kept at this value for about 2 minutes. Then, the stainless steel plates were placed in a press at room temperature under the pressure of 5 MPa for cooling, and then the molded article was removed.
If the molded article was not broken during the removal, the sample material was judged to be tough and good in moldability (marked by O). If the molded article was broken during the removal or if its size was not as designed, the sample material was judged to be not tough and poor in moldability (marked by X). If, out of 5 molded articles prepared in the manner described above, the sample material giving 4 or more molded articles showing O was judged to be tough and good in moldability. If the obtained article still showed stickiness at room temperature and was unable to retain its form, the sample material was judged to be nonassessable.

(5) Stickiness

After a sample material was heated at 200°C for 5 minutes, it was poured into a vessel having a size of 20 cm (length) × 20 cm (width) × 0.3 cm (thickness) and kept at room temperature for 30 minutes. Thereafter, when a palm was pressed onto the sample, it was judged to be sticky and marked by X if the palm sank into the sample or was attached with the sample when trying to pulling the hand away, while not to be sticky and marked by O if otherwise.

Production Example 1 (Preparation of the catalyst)

In a Schlenk flask, 3.0 g (6.97 mmol) of the lithium salt of (1,2'-dimethylsilylene)(2,1'-dimethylsilylene)-bis (indene) was dissolved in 50 milliliters of THF (tetrahydrofuran), and the resulting solution was cooled to -78°C. Here, 2.1 milliliters (14.2 mmol) of iodomethyltrimethylsilane was slowly added dropwise and then the resulting mixture was stirred at room temperature for 12 hours. After the solvent was removed by distillation, 50 milliliters of ether was added to the residue followed by washing the solution with a saturated ammonium chloride solution. After the layers were separated, the organic layer was dried and the solvent was removed to obtain 3.04 g (5.88 mmol) of (1,2'-dimethylsilylene) (2,1'-dimethylsililene)-bis(3-trimethylsilylmethylindene) (Yield 84 %).
Then, under a nitrogen stream, 3.04 g (5.88 mmol) of the thus obtained (1,2'-dimethylsilylene)(2,1'-dimethylsilylene)-bis (3-trimethylsilylmethylindene) and 50 milliliters of ether were charged into a Schlenk flask. The mixture was cooled to -78°C, to which was added a hexane solution of n-BuLi (1.54 M, 7.6 milliliters (1.7 mmol)) dropwise. The mixture was warmed to room temperature and stirred for 12 hours, and then ether was removed by distillation. The remaining solid material was washed with 40 milliliters of hexane to give 3.06 g (5.07 mmol) of the lithium salt as an ether adduct (Yield 73 %).
Measurement of $^1$H-NMR of the obtained product gave the following results.
$^1$H-NMR (90 MHz, THF-$d_8$): δ 0.04 (s, 18H, trimethylsilyl), 0.48 (s, 12H, dimethylsilylene), 1.10 (t, 6H, methyl), 2.59 (s, 4H, methylene), 3.38 (q, 4H, methylene), 6.2-7.7 (m, 8H, Ar-H).
Under a nitrogen stream, the obtained lithium salt was dissolved in 50 milliliters of toluene. The solution was cooled to -78°C, and into it 20 milliliters of a suspended toluene solution of 1.2 g (5.1 mmol) of zirconium tetrachloride which was cooled to -78°C in advance was added dropwise. After the addition, the resultant mixture was stirred at room temperature for 6 hours, and then the solvent was removed from the reaction solution by distillation. The obtained residue was recrystallized from dichloromethane to give 0.9 g (1.33 mmol) of (1,2'-dimethylsilylene)(2,1'-dimethylsilylene)-bis(3-trimethylsilylmethylindenyl) zirconium dichloride (Yield 26 %).
Measurement of $^1$H-NMR of the product gave the following results.
$^1$H-NMR (90 MHz, $CDCl_3$): δ 0.0 (s, 18H, trimethylsilyl), 1.02, 1.12 (s, 12H, dimethylsilylene), 2.51 (dd, 4H, methylene), 7.1-7.6 (m, 8H,Ar-H).

Production Example 2 (Production of 1-octadecene homopolymer)

In a heat-dried autoclave having an inner volume of 10 liters were charged 3 liters of 1-octadecene, 3 liters of heptane, 5 mmol of triisobutylaluminum, 20 μmol of (1,2'-dimethylsilylene)(2, 1'-dimethylsilylene)-bis(3-trimethylsilylmethylindenyl) zirconium dichloride which was obtained in Production Example 1, and 40 μmol of dimethylanilinium tetrakispentafluorophenylborate. Further, hydrogen was introduced into t to 0. MPa (gauge), and the polymerization was carried out at the polymerization temperature of 60°C for 420 minutes. After the polymerization reaction was completed, the reaction product was precipitated by acetone, heated, and subjected to a drying-treatment under reduced pressure to obtain 1895 g of a 1-octadecene homopolymer.
The obtained 1-octadecene homopolymer showed the stereoregularity indicator M4 of 34.0 mol %, the stereoregularity indicator MR of 14.6 mol %, weight-average molecular weight (Mw) of 122000, molecular weight distribution (Mw/Mn) of 2.2, melting point (Tm) of 41°C, the endothermic value at melting (ΔH) of 80 J/g, and the full width at half maximum of the DSC temperature peak (Wm) of 3.1°C. It was found that the content of the component with weight-average molecular weight of $10^6$ or more was 0 % by mass.

Production Example 3 (Production of polymer of α-olefins having 20 to 24 carbon atoms)

In a heat-dried autoclave having an inner volume of 10 liters were charged 2.8 kg of α-olefins having 20 to 24 carbon atoms (Trade name: Linealene 2024; manufactured by Idemitsu Kosan Co., Ltd.), 4 liters of heptane, 5 mmol of triisobutylaluminum, 20 μmol of (1,2'-dimethylsilylene)(2,1'-dimethylsilylene)-bis(3-trimethylsilylmethylindenyl) zirconium dichloride which was obtained in Production Example 1 and 40 μmol of dimethylanilinium tetrakispentaftuorophenylborate. Ffurther, hydrogen was introduced to 0.1 MPa (gauge) and the polymerization was carried out at the polymerization temperature of 60°C for 480 minutes. After the polymerization reaction was completed, the reaction product was precipitated by acetone, heated, and subjected to a drying-treatment under reduced pressure to obtain 1500 g of an α-olefin polymer.
The obtained α-olefin polymer showed the stereoregularity indicator M4 of 30.6 mol %, the stereoregularity indicator MR of 13.8 mol %, weight-average molecular weight (Mw) of 98000, molecular weight distribution (Mw/Mn) of 1.6, melting point (Tm) of 49°C, the endothermic value at melting (ΔH) of 82 J/g, and the full width at half maximum of the DSC temperature peak (Wm) of 2.3°C. It was found that the content of the component with weight-average molecular weight of $10^6$ or more was 0 % by mass.

Production Example 4 (Production of 1-butene homopolymer)

In a heat-dried autoclave having an inner volume of 10 liters, 4 liters of heptane, 2.5 kg of 1-butene, 10 mmol of triisobutylaluminum and 10 mmol of methylaluminoxane were charged. Further, hydrogen was introduced into the autoclave to 0.05 MPa (gauge) and the temperature was raised to 60°C with stirring. The polymerization was performed for 60 minutes by adding 10 μmol of (1,2'-dimethylsilylene)(2,1'-dirnethylsilylene)-bis(3-trimethylsilylmethylindenyl) zirconium dichloride obtained in Production Example 1. After the polymerization reaction was completed, the reaction mixture was dried under reduced pressure to obtain 990 g of a 1-butene homopolymer.
The obtained 1-butene homopolymer showed weight-average molecular weight (Mw) of 140000 and molecular weight distribution (Mw/Mn) of 2.0, while no melting point (Tm) was observed.

Production Example 5

A 1-Decene homopolymer was produced in the similar manner as the Production Example 3, except that 1-decene was used instead of the α-olefins having 20 to 24 carbon atoms used in Production Example 3.
The obtained 1-decene homopolymer showed the stereoregularity indicator M4 of 3.9 mol %, the stereoregularity indicator MR of 12.7 mol %, weight-average molecular weight (Mw) of 23000 and molecular weight distribution (Mw/Mn) of 2.1, while no melting point (Tm) was observed.

Example 1

In a vessel having an inner volume of 10 milliliters equipped with agitation blades, 4 g of 1-octadecene homopolymer which was obtained in Production Example 2 was charged and then the vessel was sealed with nitrogen. After the temperature was raised to 180°C, 0.3 milliliter of di-tert-butyl peroxide/heptane (1/2 in volume ratio) was added to the vessel. After stirring for about 30 minutes, the mixture was allowed to cool and a crosslinked octadecene polymer was obtained. Physical properties of the obtained crosslinked octadecene polymer were evaluated by the methods described above. The results are shown in Table 1.

Example 2

In the same manner as Example 1, crosslinking was performed to obtain a crosslinked olefin polymer from 4 g of the α-olefin polymer obtained in Production Example 3. Physical properties of the obtained crosslinked olefin polymer were evaluated by the methods described above. The results are shown in Table 1.

Comparative Example 1

In the same manner as Example 1, crosslinking was performed to obtain a crosslinked α-olefin polymer from 4 g of the 1-butene homopolymer obtained in Production Example 4. Physical properties of the obtained crosslinked butene polymer were evaluated by the methods described above. The results are shown in Table 1.

Comparative Example 2

Physical properties of the 1-octadecene homopolymer obtained by Production Example 2 were evaluated by the methods described above. The results are shown in Table 1.

Comparative Example 3

Physical properties of the 1-butene homopolymer obtained by Production Example 4 were evaluated by the methods described above. The results are shown in Table 1.

Comparative Example 4

Physical properties of the 1-decene homopolymer obtained by Production Example 5 were evaluated by the methods described above. The results are shown in Table 1.

[Table 1]

| | Example 1 | Example 2 | Comparative Example 1 | Comparative Example 2 | Comparative Example 3 | Comparative Example 4 |
|---|---|---|---|---|---|---|
| Weight-average molecular weight (Mw) | 475,000 | 786,000 | 75,000 | 122,000 | 140,000 | 23,000 |
| Molecular weigh distribution (Mw/Mn) | 10 | 20 | 2.6 | 2.2 | 2.0 | 2.1 |
| High molecular weight (≥ $10^6$) component (% by mass) | 12 | 15 | 0 | 0 | 0 | 0 |
| Melting point (°C) | 40 | 53 | 72 | 41 | Not observed | Not observed |
| ΔH(l/g) | 78 | 102 | 16 | 80 | Not observed | Not observed |
| Toughness and moldability (number of O) | 5 | 5 | 0 | 0 | 0 | Nonassessable |
| stickiness | O | O | X | O | X | X |

Industrial Applicability

The crosslinked olefin polymers of the present invention are suitable for such applications as resin modifiers, paint components, ink components, pressure-sensitive adhesive components, adhesive components, primer components, lubricating oil components, heat storage components, high-performance waxes, and the like.

## Claims

**1.** A crosslinked olefin polymer obtained by reacting an α-olefin polymer with a crosslinking agent and satisfying the following requirements (1) to (4), wherein the α-olefin polymer is obtained by polymerizing one or more α-olefin having 6 or more carbon atoms or by polymerizing one or more α-olefin having 6 or more carbon atoms with one or more other α-olefin:

(1) The content of units of α-olefins having 6 or more carbon atoms is 50 mol % or above,
(2) The molecular weight distribution (Mw/Mn) as determined by gel permeation chromatography (GPC) is 7.0 or more in terms of polystyrene,
(3) The content of components having the weight-average molecular weight (Mw) of $10^6$ or more is 5 % by mass or more as determined by GPC, and
(4) The stereoregularity indicator M4 is 75 mol % or less.

**2.** The crosslinked olefin polymer of an α-olefin having 6 or more carbon atoms according to claim 1, wherein the α-olefin has 10 or more and less than 30 carbon atoms.

**3.** The crosslinked olefin polymer according to claim 1 or claim 2, wherein the crosslinking agent is a radical-generating agent generating radicals by decomposition at 60°C or more.

**4.** A process for producing a cross-linked olefin polymer, comprising reacting an α-olefin polymer with a crosslinking agent in the absence of a solvent and satisfying the following requirements (1) to (4), wherein the α-olefin polymer

is obtained by polymerizing one or more α-olefin having 6 or more carbon atoms or by polymerizing one or more α-olefin having 6 or more carbon atoms with one or more other α-olefin:

(1) The content of units of α-olefins having 6 or more carbon atoms is 50 mol % or more,
(2) The molecular weight distribution (Mw/Mn) as determined by gel permeation chromatography (GPC) is 7.0 or more in terms of polystyrene,
(3) The content of components having the weight-average molecular weight (Mw) of $10^6$ or more is 5 % by mass or more as determined by GPC, and
(4) The indicator M4 of stereoregularity is 75 mol % or less.

**5.** The process for the production of the crosslinked olefin polymer according to claim 4, wherein the crosslinking agent is a radical-generating agent generating radicals at 60°C or more.

**6.** The process for producing the crosslinked olefin polymer according to claims 4 or 5 wherein the α-olefin polymer is obtained by polymerizing one or more α-olefin having 6 or more carbon atoms or by polymerizing one or more α-olefin having 6 or more carbon atoms with one or more other α-olefin in the presence of a polymerization catalyst comprising (A) a transition metal compound represented by the following general formula (I), and (B) at least one component selected from (B-1) a compound capable of forming an ionic complex by a reaction with the transition metal compound as the component (A) or a derivative thereof and (B-2) an aluminoxane compound ,

[Formula 1]

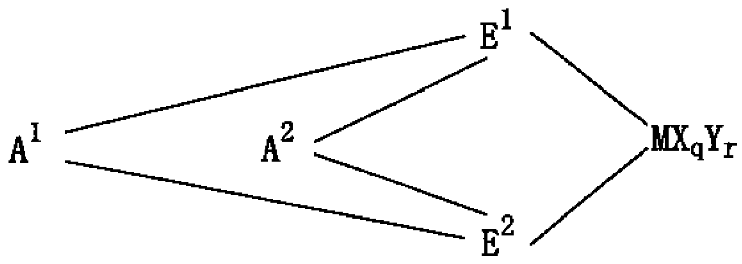

• • • (I)

(In the formula, M represents an element belonging to the groups 3 to 10 of the periodic table or a lanthanoid metal element, $E^1$ and $E^2$ each are a ligand selected from the group consisting of a substituted cyclopentadienyl group, an indenyl group, a substituted indenyl group, a heterocyclopentadienyl group, a substituted heterocyclopentadienyl group, an amide group, a phosphide group, a hydrocarbon group and a silicon-containing group, form a crosslinked structure through $A^1$ and $A^2$ and are identical or different; X represents a σ-bonding ligand, and if there is a plurality of Xs, they may be identical or different and may form a crosslinked structure with other X, $E^1$, $E^2$, or Y; Y represents a Lewis base, and if there is a plurality of Ys, they may be identical or different and may form a crosslinked structure with other Y, $E^1$, $E^2$, or X; $A^1$ and $A^2$ each are a divalent bridging group combining two ligands, represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or $-AlR^1-$, wherein $R^1$ represents a hydrogen atom, a halogen atom, a hydrocarbon group having 1 to 20 carbon atoms, or a halogen-containing hydrocarbon group having 1 to 20 carbon atoms, and are identical or different; q represents an integer of 1 to 5 and is equal to [(atomic valency of M)-2] and r represents an integer of 0 to 3.)

**7.** The process for producing the crosslinked olefin polymer according to any of claims 4 to 6, wherein the reaction of the α-olefin polymer with the crosslinking agent is continuously carried out in an extrusion molding equipment.

**INTERNATIONAL SEARCH REPORT**

International application No.
PCT/JP2005/020367

A. CLASSIFICATION OF SUBJECT MATTER
***C08F8/00***(2006.01), ***C08F4/64***(2006.01), ***C08F10/14***(2006.01)

According to International Patent Classification (IPC) or to both national classification and IPC

B. FIELDS SEARCHED

Minimum documentation searched (classification system followed by classification symbols)
C08F8/00-8/50, C08F4/64, C08F10/00-10/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JST7580(JOIS), JSTPlus(JOIS)

C. DOCUMENTS CONSIDERED TO BE RELEVANT

| Category* | Citation of document, with indication, where appropriate, of the relevant passages | Relevant to claim No. |
|---|---|---|
| Y | WO 03/070790 A1 (Idemitsu Petrochemical Co., Ltd.), 28 August, 2003 (28.08.03), Claims 1 to 5; page 7, line 25 to page 9, line 25 & EP 1477500 A1 & US 2005/0119374 A1 | 1-7 |
| Y | JP 2-49007 A (Japan Synthetic Rubber Co., Ltd.), 19 February, 1990 (19.02.90), Claims 1, 2 (Family: none) | 1-7 |
| Y | JP 2000-169522 A (TARGOR GmbH), 20 June, 2000 (20.06.00), Claim 1 & US 6313228 B & EP 1004601 A1 & DE 19854285 A | 7 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>13 January, 2006 (13.01.06) | Date of mailing of the international search report<br>24 January, 2006 (24.01.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2005/020367

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-515626 A (BP Chemicals Ltd.), 07 May, 2003 (07.05.03), Claims 1, 9, 12; Par. Nos. [0016], [0088] & US 2003/0120001 A1 & EP 1276777 A & WO 01/40323 A1 | 7 |
| A | JP 9-188722 A (Mitsui Petrochemical Industries, Ltd.), 22 July, 1997 (22.07.97), Claims 1, 23 (Family: none) | 1-7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 403866 A
- WO 03070790 A